# EUROPÄISCHE PATENTSCHRIFT

(11) **EP 2 621 078 B1**
(45) Veröffentlichungstag und Bekanntmachung des Hinweises auf die Patenterteilung: **13.08.2014**
(21) Anmeldenummer: 12152562.0
(22) Anmeldetag: 26.01.2012
(51) Int. Cl.: H02P 3/08, H02P 3/02, H02P 6/00, H02P 6/14

(54) **Verfahren und Vorrichtung zum Betreiben eines bürstenlosen Gleichstrommotors bei der Verstellung eines Stellelementes**
Method and device for operating a brushless direct-current motor when adjusting a positioning element
Procédé et dispositif destinés au fonctionnement d'un moteur à courant continu sans balais lors du réglage d'un élément de réglage

(43) Veröffentlichungstag der Anmeldung: 31.07.2013
(73) Patentinhaber: Siemens Aktiengesellschaft, 80333 München (DE)
(72) Erfinder: Kucera, Ladislav, Dr., 8800 Thalwil (CH); Schoop, Daniel, 6300 Zug (CH); Zurfluh, Martin, 6460 Altdorf UR (CH); Huwiler, Adrian, 6038 Honau (CH)
(74) Vertreter: Maier, Daniel Oliver

(56) Entgegenhaltungen:
- EP-A2- 2 239 174
- DE-A1- 19 807 875
- DE-A1-102010 013 695
- DE-B3- 10 247 321
- JP-A- 2001 065 725

## Beschreibung

Die Erfindung betrifft ein Verfahren und eine Vorrichtung zum Betreiben eines bürstenlosen Gleichstrommotors bei der Verstellung eines Stellelementes.

Bürstenlose Gleichstrommotoren sind bereits bekannt. Bei diesen ist der sonst übliche mechanische Kommutator, welcher Bürsten zur Stromwendung aufweist, durch eine elektronische Schaltung ersetzt. Bürstenlose Gleichstrommotoren weisen des Weiteren einen mit Permanentmagneten ausgestatteten Rotor und einen Wicklungen aufweisenden Stator auf. Die Wicklungen des Stators werden von der elektronischen Schaltung zeitlich versetzt angesteuert, um ein Drehfeld zu erzeugen, welches am permanent erregten Rotor ein Drehmoment verursacht. Das Kommutierungsmuster, mittels dessen die Ansteuerung der Wicklungen des Stators vorgenommen wird, wird durch eine Auswertung von Rotorpositionssignalen ermittelt, die von Hallsensoren bereitgestellt und der elektronischen Schaltung zugeführt werden. Diese steuert die Wicklungen des Stators über Treiber bzw. Verstärker an, welche beispielsweise Leistungstransistoren oder Power-MOSFETS als elektronische Schalter aufweisen.

Aus der DE 10 2006 003 151 A1 ist ein Steuerungsverfahren für einen bürstenlosen Gleichstrommotor bekannt, bei welchem eine gewünschte Umdrehungsanzahl des bürstenlosen Gleichstrommotors vorgegeben wird, diese Umdrehungsanzahl in eine geforderte Umdrehungsanzahl umgewandelt wird, ein dem bürstenlosen Gleichstrommotor aktivierender erster Versorgungsstrom zugeführt wird, die bei einer Drehung des bürstenlosen Gleichstrommotors erzeugten Umdrehungsimpulse gezählt werden, die Anzahl der gezählten Umdrehungsimpulse mit der Anzahl der geforderten Umdrehungsimpulse verglichen wird und ein vom Vergleichsergebnis abhängiger zweiter Versorgungsstrom dem bürstenlosen Gleichstrommotor zugeführt wird. Zu einem Anhalten des bürstenlosen Gleichstrommotors wird die Drehung des Motors entweder durch Setzen des Versorgungsstroms auf Null oder durch Zuführen gleicher Mehrphasenströme an die Statorwicklungen angehalten.

Des Weiteren ist es bereits bekannt, bürstenlose Gleichstrommotoren als Ventil- oder Klappenantriebe zu verwenden. Diese werden während ihrer Lebensdauer die meiste Zeit bestromt. Ohne geeignete Maßnahmen wird im Haltemodus dieser Antriebe das für den Stillstand benötigte Drehmoment vom Verstärker erzeugt. Dieser Umstand erzeugt sowohl im Motor als auch im Verstärker Verluste.

Verstellt der bürstenlose Gleichstrommotor das Stellelement von einer Position A in eine Zielposition B, dann ist eine Positionsregelung aktiv. Dabei wird der Motor mittels eines aus Rotorpositionssignalen abgeleiteten antreibenden Kommutierungsmusters betrieben. Die Rotorpositionssignale werden dabei aus den Ausgangssignalen von beispielsweise drei Hallsensoren abgeleitet. Grundsätzlich besteht die Möglichkeit, das Stellelement mittels einer derartigen Regelung an seiner Zielposition zu halten. Aufgrund der vergleichsweise groben Positionsauflösung, die darauf zurückzuführen ist, dass nur die Hallsignale der Hallsensoren ausgewertet werden, bewegt sich jedoch der Motor stets ein wenig. Dies wirkt sich negativ auf die Lebensdauer des Getriebes und auch auf die Geräuschentwicklung auf. Folglich wird der bürstenlose Gleichstrommotor nach dem Erreichen der Zielposition in einen Haltemodus überführt, in welchem er mittels eines ein benötigtes Haltemoment bereitstellenden Kommutierungsmusters betrieben wird.

Nachteilig dabei ist, dass für das Halten ein kontinuierlicher Stromfluss bereitgestellt werden muss. Die Höhe des Stromes, d. h. der Haltestromwert, richtet sich hierbei nach dem größtmöglichen Haltemoment, das der bürstenlose Gleichstrommotor gemäß seinem Datenblatt zur Verfügung stellen muss. Des Weiteren muss zusätzlich eine Reserve eingerechnet werden, um Toleranzen in der Serienfertigung auffangen zu können.

Je nach Einbaulage und Gewicht des Verstellelementes kann das benötigte Haltemoment, welches das Verstellelement in seiner Zielposition hält, sehr klein sein. Reicht bereits die vorliegende mechanische Reibung für ein Halten des Verstellelements in seiner Zielposition aus, dann kann das Haltemoment den Wert Null aufweisen. Dennoch wird in einem derartigen Fall bei bekannten Antrieben der Motor mit dem vollen Haltemoment bestromt. Dies ist in energetischer Hinsicht unwirtschaftlich. Aus diesem Grund wird in JP 2001065725 das minimale Haltemoment, und damit der Strom des Stellgliedes berechnet. Der Kleinste erforderliche Halterstrom wird nach DE 102010013695 und DE 19807875 iterativ eingestellt, die stellglieder sind jedoch Elektromagnete.

Die Aufgabe der Erfindung besteht darin, ein Verfahren und eine Vorrichtung zum Betreiben eines bürstenlosen Gleichstrommotors bei der Verstellung eines Stellelements anzugeben, bei welchem der Energieverbrauch reduziert ist.

Diese Aufgabe wird gemäß der vorliegenden Erfindung durch ein Verfahren nach Anspruch 1 zum Betreiben eines bürstenlosen Gleichstrommotors bei der Verstellung eines Stellelementes gelöst, bei welchem der bürstenlose Gleichstrommotor während der Verstellung des Stellelementes in eine Zielposition mittels eines aus Rotorpositionssignalen abgeleiteten antreibenden Kommutierungsmusters betrieben wird und nach dem Erreichen der Zielposition in einen Haltemodus überführt wird, in welchem er mittels eines ein benötigtes Haltemoment bereitstellenden Kommutierungsmusters betrieben wird, wobei im Haltemodus der zur Bereitstellung des benötigten Haltemoments erforderliche Haltestrom auf einen das benötigte Haltemoment gewährleistenden Haltestromwert minimiert wird, und wobei
der bürstenlose Gleichstrommotor ein rastmomentfreier Motor ist sowie einen mit Permanentmagneten ausgestatteten Rotor und einen Wicklungen aufweisenden Stator aufweist,
die Rotorpositionssignale von Hallsensoren hysteresebehaftet bereitgestellt werden,
der erforderliche Haltestrom mittels eines iterativen Haltestromreduzierungsverfahrens minimiert wird und
das iterative Haltestromreduzierungsverfahren nach einer vorgegebenen Anzahl hysteresebedingter Zyklen abgebrochen wird und
der dann vorliegende Haltestromwert als minimierter Haltestromwert verwendet wird.

Diese Aufgabe wird des Weiteren durch eine Vorrichtung nach Anspruch 4 zum Betreiben eines bürstenlosen Gleichstrommotors bei der Verstellung eines Stellelementes gelöst, die mit einer elektronischen Schaltung, einem mit der elektronischen Schaltung verbundenen Treiber, einem mit dem Treiber verbundenen bürstenlosen Gleichstrommotor und einem vom bürstenlosen Gleichstrommotor angesteuerten Stellelement versehen ist, wobei die elektronische Schaltung dazu ausgebildet ist, dem bürstenlosen Gleichstrommotor über den Treiber während der Verstellung des Stellelementes in eine Zielposition ein aus Rotorpositionssignalen abgeleitetes antreibendes Kommutierungsmuster bereitzustellen und den bürstenlosen Gleichstrommotor nach dem Erreichen der Zielposition in einen Haltemodus zu überführen, in welchem die elektronische Schaltung dem bürstenlosen Gleichstrommotor über den Treiber ein ein benötigtes Haltemoment bereitstellendes Kommutierungsmuster bereitstellt, wobei die elektronische Schaltung dazu ausgebildet ist, im Haltemodus den zur Bereitstellung des benötigten Haltemoments erforderlichen Haltestrom auf einen das benötigte Haltemoment gewährleistenden Haltestromwert zu minimieren, wobei
der bürstenlose Gleichstrommotor ein rastmomentfreier Motor ist, einen mit Permanentmagneten ausgestatteten Rotor und einen Wicklungen aufweisenden Stator sowie Hallsensoren mit einer Hysterese aufweist, die zur Bereitstellung der Rotorpositionssignale vorgesehen sind,
die elektronische Schaltung dazu ausgebildet ist, den erforderlichen Haltestrom mittels eines iterativen Haltestromreduzierungsverfahrens zu minimieren, und die elektronische Schaltung dazu ausgebildet ist, das iterative
Haltestromreduzierungsverfahren nach einer vorgegebenen Anzahl hysteresebedingter Zyklen abzubrechen und den dann vorliegenden Haltestromwert als minimierten Haltestromwert zu verwenden.

Die Vorteile der Erfindung bestehen darin, dass der Energieverbrauch des Motors und auch der Energieverbrauch im Treiber bzw. Verstärker auf das jeweils notwendige Minimum reduziert ist.

Vorzugsweise werden die Rotorpositionssignale von Hallsensoren bereitgestellt. Dabei werden in vorteilhafter Weise drei Hallsensoren verwendet. Die von diesen Hallsensoren gelieferten Signale werden zur Ermittlung der Rotorpositionsinformation und zur Ermittlung des Kommutierungsmusters verwendet. Es bedarf keiner weiteren Sensorik zur Ermittlung der Rotorposition.

Weitere Vorteile der Erfindung bestehen darin, dass kein selbstrastender Motor und auch keine selbsthaftende oder bremsbare Mechanik benötigt werden.

Weitere vorteilhafte Eigenschaften der Erfindung ergeben sich aus deren beispielhafter Erläuterung anhand der Zeichnungen.

Es zeigt
- Figur 1: ein Blockschaltbild einer Vorrichtung zur Verstellung eines Stellelementes,
- Figur 2: ein Diagramm zur Veranschaulichung der Minimierung des Haltestroms,
- Figur 3: ein Diagramm zur Veranschaulichung der Minimierung des Haltestroms beim Vorliegen eines kleinen Lastmoments und
- Figur 4: ein Diagramm zur Veranschaulichung der Minimierung des Haltestroms beim Vorliegen eines großen Lastmoments.

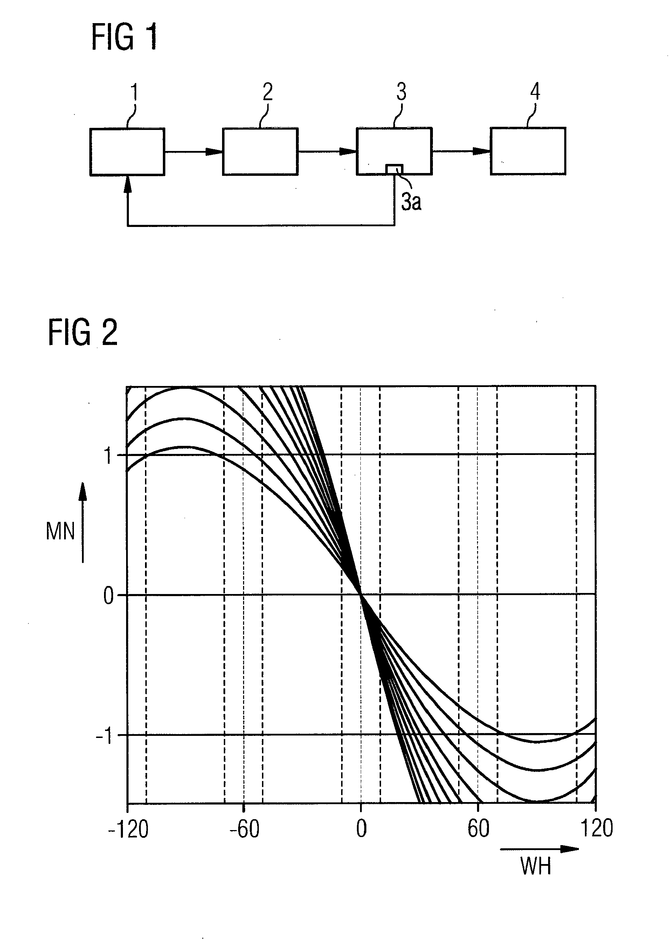

Die Figur 1 zeigt ein Blockschaltbild einer Vorrichtung zur Verstellung eines Stellelementes. Diese Vorrichtung weist eine elektronische Schaltung 1, einen Treiber bzw. Verstärker 2, einen mit insgesamt drei Hallsensoren 3a ausgestatteten bürstenlosen Gleichstrommotor 3 und ein Verstellelement 4 auf.

Der bürstenlose Gleichstrommotor 3 umfasst einen mit Statorwicklungen ausgestatteten Stator und einen Permanentmagnete enthaltenden Rotor. Die Statorwicklungen des bürstenlosen Gleichstrommotors 3 werden von der elektronischen Schaltung 1, bei der es sich vorzugsweise um einen Mikrocomputer handelt, über den Treiber bzw. Verstärker 2 mittels eines Kommutierungsmusters angesteuert. Dieses Kommutierungsmuster wird von der elektronischen Schaltung 1 unter Verwendung der von den Hallsensoren 3a gelieferten Rotorpositionssignale ermittelt.

Bei dem Verstellelement 4 handelt es sich beim gezeigten Ausführungsbeispiel um ein Ventil oder um eine Klappe. Dieses Verstellelement 4 wird unter Verwendung des genannten Kommutierungsmusters, bei welchem es sich um ein antreibendes Kommutierungsmuster handelt, von einer Ausgangsposition A in eine Zielposition B gebracht.

Hat das Verstellelement seine Zielposition erreicht, dann geht der Antrieb in einen Haltemodus über. Dabei bleibt er auf einem Hallübergang stehen, der nachfolgend als Nullgradlinie bezeichnet wird. Diese Nullgradlinie ist in der Figur 2 veranschaulicht, in welcher längs der Abszisse der Hallwinkel WH in Grad und längs der Ordinate das normalisierte Moment MN aufgetragen ist. Die genannte Nullgradlinie befindet sich beim Hallwinkel WH = 0°.

Legt man nun einen Haltestrom an, dann wird der Motor stets in Richtung der Nullgradlinie gezogen. Je mehr man sich dieser Nullgradlinie nähert, desto kleiner wird die Motorkraft, die ihn in diese Richtung zieht. Liegt ein Moment am Motor an, dann stellt sich mit dem Haltemoment des Motors eine Gleichgewichtsposition links oder rechts von der Nullgradlinie ein.

Mittels des erfindungsgemäßen Verfahrens wird nunmehr der Haltestrom solange minimiert, bis die Gleichgewichtsposition, die in der Figur 2 durch Punkte veranschaulicht ist, die + 60°-Linie bzw. die - 60°-Linie überschreitet. Danach wird der Strom wieder erhöht und es entsteht eine Gleichgewichtslage bei einem niedrigeren Strom. Ist das benötigte Haltemoment sehr klein, dann lässt sich der Haltestrom bis auf 0 A absenken.

In der Figur 2 ist veranschaulicht, dass der Haltestrom mittels eines iterativen Haltestromreduzierungsverfahrens solange reduziert wird, bis sich beim gezeigten Ausführungsbeispiel eine Gleichgewichtsposition bei WH = - 70° und MN = 1 einstellt. Je kleiner die Amplitude der Sinusschwingung ist, desto kleiner ist der Haltestrom IH.

Da Hallsensoren ein magnetisches Feld messen, unterliegen sie einer Hysterese. Dies ist in der Figur 2 durch die senkrecht verlaufenden gestrichelten Linien angedeutet. Bei der genannten Reduktion des Stromes wird beispielsweise die - 60°-Linie erst bei - 70° erfasst. Anschließend wird der Strom wieder solange erhöht, bis die - 50°-Linie erreicht ist. Danach beginnt der Zyklus des Reduzierens von Neuem. Dieser Kreislauf würde ohne zusätzliche Maßnahmen stets weitergehen. Dies hat aber die Nachteile, dass die Bewegung sichtbar ist, das Getriebe beschädigt werden kann und das gebildete Stromdreieck groß sein kann, so dass ein unnötig hoher Energieverbrauch entsteht.

Aus diesem Grund wird bei einem Verfahren gemäß der Erfindung das iterative Haltestromreduzierungsverfahren nach einer vorgegebenen Anzahl von Zyklen abgebrochen und der dann vorliegende Stromwert wird als minimierter Haltestromwert verwendet.

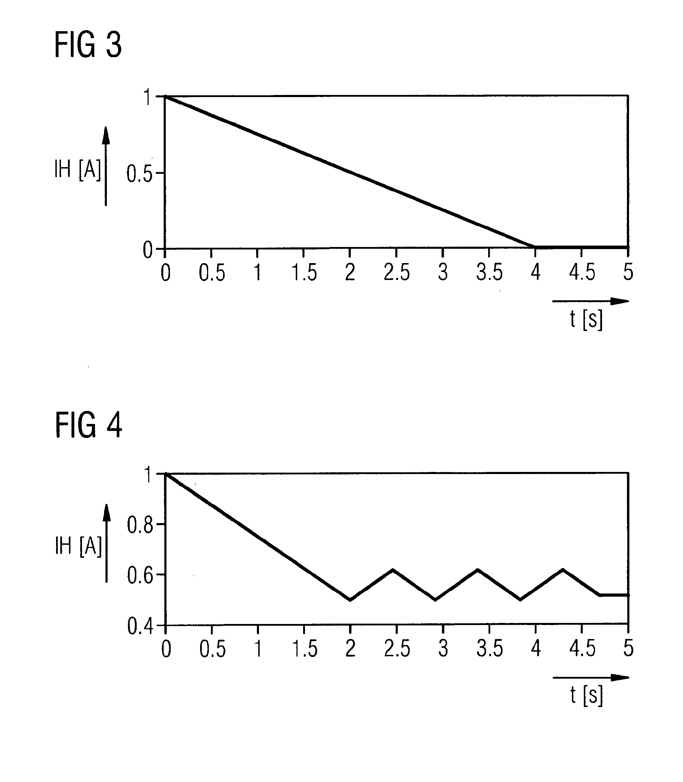

Bei dem in der Figur 4 dargestellten Ausführungsbeispiel wird das iterative Haltestromreduzierungsverfahren nach insgesamt drei Zyklen bei einem Hallwinkel WH in der Nähe von - 70° abgebrochen. An dieser Stelle ist der Haltestrom am niedrigsten.

Die Figur 3 zeigt ein Diagramm zur Veranschaulichung der Minimierung des Haltestroms beim Vorliegen eines kleinen Lastmoments. Dabei ist längs der Abszisse die Zeit t in Sekunden und längs der Ordinate der Haltestrom IH in Ampere aufgetragen. Der im Diagramm gezeigte Verlauf des Haltestroms über der Zeit lässt erkennen, dass der Haltestrom beim Vorliegen eines kleinen Lastmoments durch eine Anwendung des beschriebenen Haltestromreduzierungsverfahrens bis auf 0 A reduziert bzw. minimiert werden kann.

Die Figur 4 zeigt ein Diagramm zur Veranschaulichung der Minimierung des Haltestroms beim Vorliegen eines großen Lastmomentes. Auch in dieser Figur ist längs der Abszisse die Zeit t in Sekunden und längs der Ordinate der Haltestrom IH in Ampere aufgetragen. Der im Diagramm gezeigte Verlauf des Haltestroms lässt erkennen, dass der Haltestrom beim Vorliegen eines großen Lastmomentes durch eine Anwendung des beschriebenen Haltestromreduzierungsverfahrens zunächst von 1 A bis auf 0,5 A zurückgeht, dann drei aufeinanderfolgende Stromdreiecke bildet, bei welchen er jeweils wieder bis auf 0,6 A ansteigt und dann jeweils wieder auf 0,5 A abfällt und dass am Ende des dritten Stromdreiecks der Haltestromwert bei 0,5 A eingefroren wird. Dieser Haltestromwert von 0,5 A wird dann als minimierter Haltestromwert verwendet.

Die Anzahl der Zyklen bzw. Stromdreiecke, nach welcher das iterative Haltestromreduzierungsverfahren abgebrochen wird, kann auch 2 sein oder größer als 3 sein. Beispielsweise kann die Anzahl der Zyklen bzw. Stromdreiecke, nach welcher das iterative Haltestromreduzierungsverfahren abgebrochen wird, auch 4, 5, 6, 7 usw., sein.

Der durch das beschriebene Haltestromreduzierungsverfahren ermittelte minimierte Haltestromwert ist jeweils so groß, dass er beim jeweils vorliegenden Lastmoment ausreichend groß ist, um das Stellelement in seiner Zielposition zu halten. Die Einrechnung einer zusätzlichen Reserve, um Fertigungstoleranzen aufzufangen, ist nicht notwendig.

### Bezugszeichenliste

- 1: Elektronische Schaltung
- 2: Treiber, Verstärker
- 3: bürstenloser Gleichstrommotor
- 3a: Hallsensoren
- 4: Stellelement

- IH: Haltestrom
- MN: Normalisiertes Moment
- t: Zeit
- WH: Hall-Winkel

## Patentansprüche

1. Verfahren zum Betreiben eines bürstenlosen Gleichstrommotors bei der Verstellung eines Stellelementes, bei welchem der bürstenlose Gleichstrommotor während der Verstellung des Stellelementes in eine Zielposition mittels eines aus Rotorpositionssignalen abgeleiteten antreibenden Kommutierungsmusters betrieben wird und nach dem Erreichen der Zielposition in einen Haltemodus überführt wird, in welchem er mittels eines ein benötigtes Haltemoment bereitstellenden Kommutierungsmusters betrieben wird, wobei im Haltemodus der zur Bereitstellung des benötigten Haltemoments erforderliche Haltestrom auf einen das benötigte Haltemoment gewährleistenden Haltestromwert minimiert wird,
**dadurch gekennzeichnet,**
- **dass** der bürstenlose Gleichstrommotor ein rastmomentfreier Motor ist sowie einen mit Permanentmagneten ausgestatteten Rotor und einen Wicklungen aufweisenden Stator aufweist,
- **dass** die Rotorpositionssignale von Hallsensoren hysteresebehaftet bereitgestellt werden,
- **dass** der erforderliche Haltestrom mittels eines iterativen Haltestromreduzierungsverfahrens minimiert wird und
- **dass** das iterative Haltestromreduzierungsverfahren nach einer vorgegebenen Anzahl hysteresebedingter Zyklen abgebrochen wird und der dann vorliegende Haltestromwert als minimierter Haltestromwert verwendet wird.

2. Verfahren nach Anspruch 1
**dadurch gekennzeichnet,**
**dass** mittels des bürstenlosen Gleichstrommotors eine Verstellung eines Ventils oder einer Klappe erfolgt.

3. Verfahren nach einem der vorherigen Ansprüche,
**dadurch gekennzeichnet,**
**dass** beim Vorliegen eines kleinen benötigten Haltemoments der Haltestromwert auf 0 A reduziert wird.

4. Vorrichtung zum Betreiben eines bürstenlosen Gleichstrommotors bei der Verstellung eines Stellelementes, mit einer elektronischen Schaltung (1), einem mit der elektronischen Schaltung (1) verbundenen Treiber (2), einem mit dem Treiber (2) verbundenen bürstenlosen Gleichstrommotor (3) und einem vom bürstenlosen Gleichstrommotor angesteuerten Stellelement (4), wobei die elektronische Schaltung (1) dazu ausgebildet ist, dem bürstenlosen Gleichstrommotor (3) über den Treiber (2) während der Verstellung des Stellelementes (4) in eine Zielposition ein aus Rotorpositionssignalen abgeleitetes antreibendes Kommutierungsmuster bereitzustellen und den bürstenlosen Gleichstrommotor nach dem Erreichen der Zielposition in einen Haltemodus zu überführen, in welchem die elektronische Schaltung (1) dem bürstenlosen Gleichstrommotor (3) über den Treiber (2) ein ein benötigtes Haltemoment bereitstellendes Kommutierungsmuster bereitstellt, wobei die elektronische Schaltung (1) dazu ausgebildet ist, im Haltemodus den zur Bereitstellung des benötigten Haltemoments erforderlichen Haltestrom auf einen das benötigte Haltemoment gewährleistenden Haltestromwert zu minimieren,
**dadurch gekennzeichnet,**
- **dass** der bürstenlose Gleichstrommotor ein rastmomentfreier Motor ist sowie einen mit Permanentmagneten ausgestatteten Rotor und einen Wicklungen aufweisenden Stator aufweist,
- **dass** er Hallsensoren (3a) mit einer Hysterese aufweist, die zur Bereitstellung der Rotorpositionssignale vorgesehen sind,
- **dass** die elektronische Schaltung (1) dazu ausgebildet ist, den erforderlichen Haltestrom mittels eines iterativen Haltestromreduzierungsverfahrens zu minimieren, und
- **dass** die elektronische Schaltung (1) dazu ausgebildet ist, das iterative Haltestromreduzierungsverfahren nach einer vorgegebenen Anzahl hysteresebedingter Zyklen abzubrechen und den dann vorliegenden Haltestromwert als minimierten Haltestromwert zu verwenden.

5. Vorrichtung nach Anspruch 4,
**dadurch gekennzeichnet,**
**dass** sie drei Hallsensoren aufweist.

6. Vorrichtung nach einem der Ansprüche 4 - 5,
**dadurch gekennzeichnet,**
**dass** das Stellelement (4) ein Ventil oder eine Klappe ist.

## Claims

1. Method for driving a brushless direct-current motor during the displacement of an actuating element, wherein during the displacement of the actuating element to a target position the brushless direct-current motor is driven by means of a driving commutation pattern derived from rotor position signals and after the target position is reached it transitions to a holding mode in which it is driven by means of a commutation pattern providing a required holding torque, wherein in the holding mode the holding current necessary for providing the required holding torque is minimised to a holding current value guaranteeing the required holding torque
**characterised in that**
- the brushless direct-current motor is a cogging torque-free motor and has a rotor equipped with permanent magnets and a stator having windings,
- the rotor position signals are provided by Hall-effect sensors and subject to hysteresis,
- the required holding current is minimised by means of an iterative holding current reduction method and
- the iterative holding current reduction method is aborted after a predefined number of cycles determined by hysteresis and the holding current value then present is used as the minimised holding current value.

2. Method according to claim 1,
**characterised in that**
a valve or throttle is displaced by means of the brushless direct-current motor.

3. Method according to one of the preceding claims,
**characterised in that**
when a small required holding torque is present the holding current value is reduced to 0 A.

4. Device for driving a brushless direct-current motor during the displacement of an actuating element, comprising an electronic circuit (1), a driver (2) connected to the electronic circuit (1), a brushless direct-current motor (3) connected to the driver (2), and an actuating element (4) activated by the brushless direct-current motor, wherein the electronic circuit (1) is embodied to provide the brushless direct-current motor (3) with a driving commutation pattern derived from rotor position signals by way of the driver (2) during the displacement of the actuating element (4) to a target position and after the target position is reached to transition the brushless direct-current motor into a holding mode in which the electronic circuit (1) provides the brushless direct-current motor (3) with a commutation pattern providing a required holding torque by way of the driver (2), wherein the electronic circuit (1) is embodied to minimise the holding current necessary for providing the required holding torque in the holding mode to a holding current value guaranteeing the required holding torque,
**characterised in that**
- the brushless direct-current motor is a cogging torque-free motor and has a rotor equipped with permanent magnets and a stator having windings,
- it has Hall-effect sensors (3a) with a hysteresis, which are provided for providing the rotor position signals,
- the electronic circuit (1) is embodied to minimise the required holding current by means of an iterative holding current reduction method and
- the electronic circuit (1) is embodied to abort the iterative holding current reduction method after a predefined number of cycles determined by hysteresis and to use the holding current value then present as the minimised holding current value.

5. Device according to claim 4,
**characterised in that**
it has three Hall-effect sensors.

6. Device according to one of claims 4 - 5,
**characterised in that**
the actuating element (4) is a valve or throttle.

## Revendications

1. Procédé pour faire fonctionner un moteur à courant continu sans balais lors du déplacement d'un élément de réglage, selon lequel le moteur à courant continu sans balais fonctionne pendant le déplacement de l'élément de réglage dans une position cible au moyen d'un modèle de commutation entraînant dérivé de signaux de position de rotor puis, une fois que la position cible a été atteinte, passe dans un mode de maintien dans lequel il fonctionne au moyen d'un modèle de commutation fournissant un couple de maintien requis, sachant qu'en mode de maintien, le courant de maintien nécessaire pour la fourniture du couple de maintien requis est minimisé à une valeur de courant de maintien assurant ledit couple de maintien requis, **caractérisé**
- **en ce que** le moteur à courant continu sans balais est un moteur exempt de couple résiduel et comporte un rotor équipé d'aimants permanents et un stator doté d'enroulements,
- **en ce que** les signaux de position de rotor sont fournis à hystérésis par des capteurs de Hall,
- **en ce que** le courant de maintien requis est minimisé au moyen d'un procédé de réduction de courant de maintien itératif et
- **en ce que** le procédé de réduction de courant de maintien itératif est arrêté après un nombre prédéfini de cycles d'hystérésis et la valeur de courant de maintien alors présente est utilisée comme valeur de courant de maintien minimisée.

2. Procédé selon la revendication 1, **caractérisé en ce que** le moteur à courant continu sans balais opère un déplacement d'une soupape ou d'un clapet.

3. Procédé selon l'une des revendications précédentes, **caractérisé en ce qu'**en présence d'un petit couple de maintien requis, la valeur de courant de maintien est réduite à 0 A.

4. Dispositif pour faire fonctionner un moteur à courant continu sans balais lors du déplacement d'un élément de réglage, comprenant un circuit électronique (1), un circuit d'attaque (2) relié au circuit électronique (1), un moteur à courant continu sans balais (3) relié au circuit d'attaque (2) et un élément de réglage (4) commandé par le moteur à courant continu sans balais, le circuit électronique (1) étant conçu pour fournir au moteur à courant continu sans balais (3), via le circuit d'attaque (2), pendant le déplacement de l'élément de réglage (4) dans une position cible, un modèle de commutation entraînant dérivé de signaux de position de rotor puis, une fois que la position cible a été atteinte, pour faire passer le moteur à courant continu sans balais dans un mode de maintien dans lequel le circuit électronique (1) fournit au moteur à courant continu sans balais (3), via le circuit d'attaque (2), un modèle de commutation fournissant un couple de maintien requis, le circuit électronique (1) étant conçu pour minimiser, en mode de maintien, le courant de maintien nécessaire pour la fourniture du couple de maintien requis à une valeur de courant de maintien assurant ledit couple de maintien requis, **caractérisé**
- **en ce que** le moteur à courant continu sans balais est un moteur exempt de couple résiduel et comporte un rotor équipé d'aimants permanents et un stator doté d'enroulements,
- **en ce qu'**il comporte des capteurs de Hall (3a) à hystérésis, prévus pour fournir les signaux de position de rotor,
- **en ce que** le circuit électronique (1) est conçu pour minimiser le courant de maintien requis au moyen d'un procédé de réduction de courant de maintien itératif, et
- **en ce que** le circuit électronique (1) est conçu pour arrêter le procédé de réduction de courant de maintien itératif après un nombre prédéfini de cycles d'hystérésis et pour utiliser la valeur de courant de maintien alors présente comme valeur de courant de maintien minimisée.

5. Dispositif selon la revendication 4, **caractérisé en ce qu'**il comporte trois capteurs de Hall.

6. Dispositif selon l'une des revendications 4 - 5, **caractérisé en ce que** l'élément de réglage (4) est une soupape ou un clapet.
